Europäisches Patentamt

(19) European Patent Office

Office européen des brevets

(11) Veröffentlichungsnummer: **0 027 634**
**A2**

## (12) EUROPÄISCHE PATENTANMELDUNG

(21) Anmeldenummer: 80106282.9

(22) Anmeldetag: 15.10.80

(51) Int. Cl.³: **G 01 D 9/34**
G 01 R 17/04

(30) Priorität: 22.10.79 DE 2942614

(43) Veröffentlichungstag der Anmeldung:
29.04.81 Patentblatt 81/17

(84) Benannte Vertragsstaaten:
DE GB SE

(71) Anmelder: SIEMENS AKTIENGESELLSCHAFT Berlin
und München
Postfach 22 02 61
D-8000 München 22(DE)

(72) Erfinder: Dahlström, Bo
Drivbänksvägen 8
S-162 41 Vällingby(SE)

(72) Erfinder: Olsson, Sven Gunnar
Malmvägen 47 C
S-191 61 Sollentuna(SE)

(54) Schreibgerät.

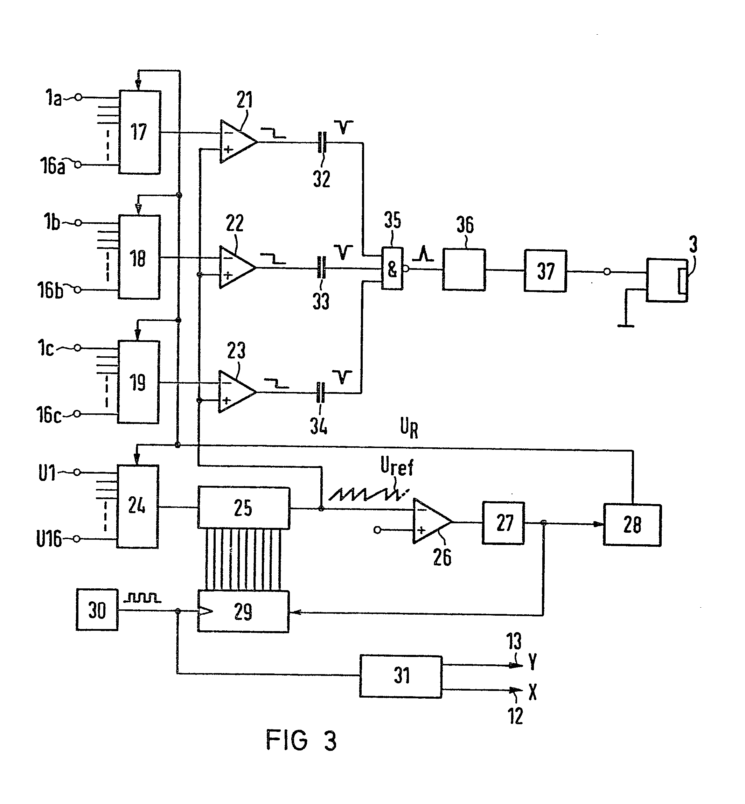

(57) Die Erfindung bezieht sich auf ein Schreibgerät, mit Schreibelement und Aufzeichnungsträger, die relativ zueinander zum Aufzeichnen von Meßsignalen auf dem Aufzeichnungsträger verschiebbar sind und wobei das Schreibelement zur Aufzeichnung mehrerer Signale auf dem Aufzeichnungsträger ausgebildet ist. Ziel der Erfindung ist es, ein solches Schreibgerät zu schaffen, das bei geringstmöglichem technischen Aufwand optimale Variationsmöglichkeit bei der Aufzeichnung einer Vielzahl von einzelnen Signalen bietet. Dieses Ziel wird erfindungsgemäß dadurch erreicht, daß einem einzelnen Schreibkopf (3) als Schreibelement auf dem Aufzeichnungsträger (4) eine variable Zahl, z.B. zwischen eins und sechzehn, von Aufzeichnungsbahnen (11) für Meßsignale (S) zugeordnet ist, in die der Schreibkopf durch Motorantrieb (6) in zeitlicher Aufeinanderfolge zur Aufzeichnung der Signale im Zeitmultiplex-Betrieb einfahrbar ist, wobei die Breite einer jeweils vorgewählten Bahn vorgegeben ist durch einen Breitenwähler (24), der entsprechend einem vorab an ihm einzustellenden Breitenprogramm die Breiten festlegt und dem ein Breiten/Spannungswandler (25) nachgeschaltet ist, der der jeweils auszuschreibenden Breite entsprechend eine mehr oder weniger rasch ansteigende Rampenspannung (U$_R$) erzeugt, die zusammen mit den im Multiplex-Betrieb gewonnen Signalwerten einem Komparator (21 bis 23) zum Vergleich und zur Abgabe eines Schreibsignales an den Schreibkopf (3) zur Aufzeichnung eines Signalpunktes bei Gleichheit der Spannungswerte zugeleitet wird (Fig. 3).

./...

FIG 3

SIEMENS AKTIENGESELLSCHAFT        Unser Zeichen
Berlin und München                VPA 79 P 5959  EUR


Schreibgerät

Die Erfindung bezieht sich auf ein Schreibgerät mit Schreibelement und Aufzeichnungsträger, die relativ zueinander zum Aufzeichnen von Meßsignalen auf dem Aufzeichnungsträger verschiebbar sind und wobei das Schreibelement zur Aufzeichnung mehrerer Signale auf dem Aufzeichnungsträger ausgebildet ist.

Bei Schreibgeräten dieser Art besteht der Wunsch, daß mit möglichst geringem Gesamtaufwand an Elektronik und mechanischen Bauteilen eine höchstmögliche Effektivität in der Signalaufzeichnung gewonnen wird. Insbesondere soll bei optimal kompakter Bauweise eine möglichst große Anzahl von Schreibmöglichkeiten für eine entsprechend hohe Zahl von Signalen zur Verfügung gestellt werden. Darüber hinaus soll gleichzeitig eine beliebig rasche Variationsmöglichkeit der Zahl aufzuzeichnender Einzelsignale in Einzelbahnen gegeben sein.

Kue 5 Rl / 3.10.1979

- 2 -    VPA 79 P 5959  EUR

Aufgabe vorliegender Erfindung ist es, ein Schreibgerät der eingangs genannten Art aufzubauen, das vorstehende Bedingungen insgesamt optimal erfüllt.

Die Aufgabe wird erfindungsgemäß dadurch gelöst, daß
einem einzelnen Schreibkopf als Schreibelement auf dem
Aufzeichnungsträger eine variable Zahl, z. B. zwischen
eins und sechzehn, von Aufzeichnungsbahnen für Meßsignale zugeordnet ist, in die der Schreibkopf durch
Motorantrieb in zeitlicher Aufeinanderfolge zur Aufzeichnung der Signale im Zeitmultiplex-Betrieb einfahrbar ist, wobei die Breite einer jeweils vorgewählten Bahn vorgegeben ist durch einen Breitenwähler,
der entsprechend einem vorab an ihm einzustellenden
Breitenprogramm die Breiten festlegt und dem ein
Breiten/Spannungswandler nachgeschaltet ist, der der
jeweils auszuschreibenden Breite entsprechend eine
mehr oder weniger rasch ansteigende Rampenspannung
erzeugt, die zusammen mit den im Multiplex-Betrieb
gewonnenen Signalwerten einem Komparator zum Vergleich und zur Abgabe eines Schreibsignales an den
Schreibkopf zur Aufzeichnung eines Signalpunktes bei
Gleichheit der Spannungswerte zugeleitet wird.

Die Erfindung ermöglicht bei optimal geringem mechanischen und elektronischen Aufwand optimale Variabilität in der Signalaufzeichnung. Mit lediglich einem
einzelnen Schreibkopf besteht die Möglichkeit, insgesamt bis zu beispielsweise sechzehn Signale oder beliebige Unterkombinationen dieser Signale nach Programm auf einer einzigen Aufzeichnungsunterlage in
jeweils gleich oder beliebig unterschiedlich breiten
Aufzeichnungsbahnen darzustellen.

Weitere Vorteile und Einzelheiten der Erfindung ergeben sich aus der nachfolgenden Beschreibung eines Ausführungsbeispiels anhand der Zeichnung in Verbindung mit den Unteransprüchen.

Es zeigen:

Fig. 1 das erfindungsgemäße Schreibgerät in perspektivischer Ansicht,

Fig. 2 einen Detailausschnitt des Schreibgerätes der Fig. 1, der den Motorantrieb für den einzelnen Schreibkopf näher darstellt,

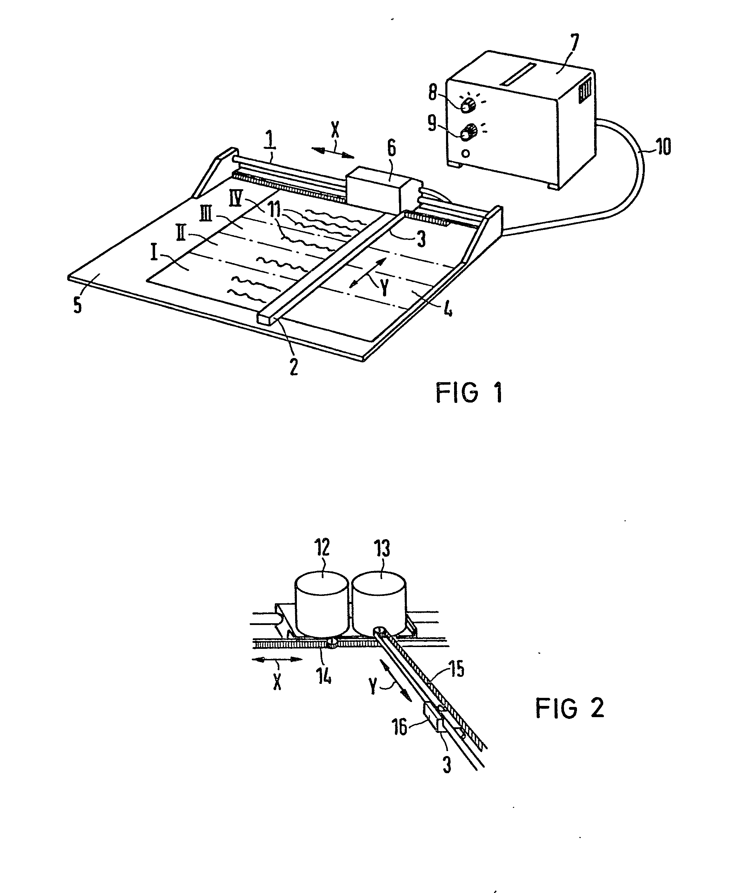

Fig. 2 die Schaltungsanordnung zum Betrieb des Schreibgerätes im Prinzipschaltbild.

Die Fig. 1 zeigt das Schreibgerät 1, das eine Gleitschiene 2 umfaßt, an deren Unterseite ein Schreibkopf 3 in Y-Richtung entlang der Schiene und zusammen mit der Schiene in X-Richtung verschiebbar gehaltert ist. Der Schreibkopf 3 ist im vorliegenden Fall beheizbar ausgebildet. Der Aufzeichnungsträger ist mit 4 bezeichnet und liegt auf einer Schreibunterlage 5 des Gerätes. Als Material dient thermosensitives Papier, das bei Andruck des beheizten Schreibkopfes 3 Aufzeichnungsspuren für das jeweilige Signal hinterläßt. Die Ausbildung als thermosensitiver Schreiber ist jedoch lediglich beispielhaft. Im Rahmen der Erfindung können selbstverständlich auch andere Schreiber, wie Stiftschreiber, Tintenstrahlschreiber, Tröpfchenschreiber etc., eingesetzt werden. Mit 6 ist ein Motorantrieb für die Verschiebebewegung in X- bzw. Y-Richtung bezeichnet. Ein Steuerergerät zur Steuerung der Schreibbewegung über den Motorantrieb 6 sowie zur Erzeugung von Schreibsignalen für den Schreibkopf 3 ist mit 7 angegeben. Erwünschte Steuerprogramme lassen sich mittels Schalter 8 und 9 einstellen. Energiezuleitung für Motorantrieb und Beheizung sowie Signalzuführung erfolgen über ein Leitungskabel 10. Das Schreibgerät der Fig. 1 arbeitet im Zeitmultiplex-Betrieb; entsprechend schreibt der Schreibkopf 3 Meßsignale 11 durch schrittweise Querdurchtaktung über die Y-Achse mit jeweils nachfolgender Weiterschaltung um einen Taktschritt in X-Richtung Punkt für Punkt im Zeitmultiplex-Betrieb.

Die Fig. 2 zeigt, daß der Motorantrieb 6 insgesamt zwei Motoren 12 und 13 umfaßt, die hier als Schrittmotoren ausgebildet sind. Der Motor 12 betreibt Schrittbewegung in X-Richtung über den Riementrieb 14 und der Motor 13 bewirkt Schrittbewegung in Y-Richtung über den Riementrieb 15. Der Schreibkopf 3 befindet sich an der Unterseite des durch den Riementrieb 15 in X-Richtung verschiebbaren Gleiters 16. Das Gebilde der Fig. 2 kann, was den Riementrieb 15 betrifft, durch die Gleitschiene 2 der Fig. 1 abgedeckt sein. Selbstverständlich kann bei Bedarf auf eine zusätzliche abdeckende Gleitschiene verzichtet werden. Andere Modifikationsmöglichkeiten sind ebenfalls möglich.

Die spezielle Schaltungsanordnung zum Betrieb des Schreibgerätes der Fig. 1 und 2 zeigt die Fig. 3. Dieses Schaltbild beinhaltet beispielsweise drei Zeitmultiplex-Schaltungsanordnungen 17, 18 und 19. Jede dieser Anordnungen besitzt insgesamt sechzehn Eingänge 1a bis 16a bzw. 1b bis 16b bzw. 1c bis 16c für insgesamt 3 x 16 = 48 einzelne Signale. Mit dem Schreibgerät lassen sich bei Vollausnutzung demnach also insgesamt 48 Meßsignale im Zeitmultiplex-Betrieb in zueinander parallelen oder bei Bedarf auch in sich überlappenden oder übereinanderliegenden Bahnen aufzeichnen. Durch Auslassen einzelner Signale an bestimmten Signaleingängen läßt sich die Zahl darzustellender Signale in beliebiger Weise vermindern.

Die an den Ausgängen der Zeitmultiplex-Schaltungsanordnungen 17 bis 19 im Zeitmultiplex anfallenden Signalinformationen werden auf den einen Eingang vom Komparatoren 21, 22 und 23 gegeben. Am anderen Eingang der Komparatoren liegt eine Rampenspannung $U_R$, die durch eine weitere Zeitmultiplex-Anordnung 24 mit nachgeschaltetem Digital-Analog-Wandler 25 erzeugt wird. Die Zeitmultiplex-Anordnung 24 weist wiederum sechzehn Spannungseingänge auf, an denen Gleichspannungen U1 bis U16 liegen. Die Gleichspannungen U1 bis U16 können nach Programm vorwählbar sein; sie können beispielsweise in gleichen Volt-Schritten, beispielsweise 1 Volt-Schritt, gestuft sein. Ebensogut besteht die Möglichkeit anderer Schrittkombinationen. In Abhängigkeit von den gewählten Stufenschritten der Spannung U1 bis U16 ergibt sich am Ausgang des Digital-Analog-Wandlers 25 eine mehr oder weniger rasch ansteigende Rampenspannung $U_R$. Diese Rampenspannung $U_R$ wird in einem weiteren Komparator 26 mit einer Referenzspannung $U_{ref}$ verglichen. Bei Gleichheit der Spannungen erzeugt der Komparator 26 ein Ausgangssignal, das eine monostabile Kippstufe 27 setzt. Mit Rückkippen der monostabilen Kippstufe 27 wird einerseits ein Kanalzähler 28 angesteuert, der ausgangsseitig mit den Zeitmultiplex-Anordnungen 17, 18, 19 und 24 gekoppelt ist; andererseits wird durch die monostabile Kippstufe 27 ein Binärzähler 29 rückgesetzt, der Impulse eines Quarzoszillators 30 zählt. Die Impulse des Quarzoszillators 30 sind gleichzeitig Schrittimpulse für die Antriebsschaltung 31 des X-Schrittmotors 12 sowie des Y-Schrittmotors 13. Der Binärzähler 29 ist über die Signalleitungen 32 mit dem Digital-Analog-Wandler 25 verkoppelt. Die beschriebene Gesamtanordnung 24 bis 31
dient zur Festlegung der Zahl von Aufzeichnungsbahnen
für einzelne Meßsignale auf dem Aufzeichnungsträger
4 bzw. der Vorwahl der Breite einzelner Aufzeichnungsbahnen bei vorgegebener Gesamtzahl. Je nach Vorwahl
der Spannungswerte U1 bis U16 an der als Breitenwähler dienenden Zeitmultiplex-Anordnung 24 ergibt
sich, wie schon angedeutet, mehr oder weniger rascher
Anstieg der Rampenspannung $U_R$ am Ausgang des Digital-
Analog-Wandlers 25. Entsprechend diesem mehr oder
weniger raschen Anstieg wird auch am Komparator 26 die
Vergleichsspannung $U_{ref}$ mehr oder weniger rasch erreicht. Dies bedeutet, daß in Abhängigkeit vom Anstieg der Rampenspannung $U_R$ die monostabile Kippstufe
27 rascher oder möglicherweise weniger rasch gesetzt
wird, wodurch wiederum der Binärzähler 29 rascher
oder weniger rasch zurückgesetzt wird. Dient also
die Zeitmultiplex-Anordnung 24 als Breitenwähler, an
dem durch Vorwahl bestimmter Spannungen U1 bis U16
die erwünschte Breite einzelner, in der Zahl vorgewählter Aufzeichnungsbahnen vorgebbar ist, so kann der
Digital-Analog-Wandler 25 als Breiten/Spannungswandler
bezeichnet werden, der in Verbindung mit seiner Rampenausgangsspannung $U_R$ und den vorstehend beschriebenen
Schaltungselementen 28 bis 29 die Breiten einzelner
vorzuwählender Bahnen auf dem Aufzeichnungsträger 4
festlegt. Die Zahl der Meßsignale, die einer einzelnen
Aufzeichnungsbahn zugeordnet werden soll, ist hingegen
durch Vorwahl einzelner Signalspannungen 1a bis 16c
an den Zeitmultiplex-Anordnungen 17 bis 19 in Verbindung mit der Rampenspannung $U_R$ über die Komparatoren
21 bis 23 festlegbar. Wird beispielsweise die Breite
einer Aufzeichnungsbahn relativ groß gewählt, so besteht die Möglichkeit, durch Vorwahl einer größeren Anzahl von Signalen sämtliche dieser Signale in diesem einzelnen breiten Streifen darzustellen. Ebensogut besteht die Möglichkeit, lediglich ein einzelnes Signal oder nur einige wenige vorzuwählen. Bei der gewählten großen Breite wird dann das Signal in der Amplitude gedehnt, so daß sich gegenüber anderen Aufzeichnungsbahnen ein breiterer Amplitudenverlauf ergibt. Die Fig. 1 zeigt beispielsweise ein Aufzeichnungsschema in z. B. vier Bahnen I, II, III, IV, wobei in der Bahn I zwei Meßsignale, in den Bahnen II und III lediglich ein Meßsignal und in der Bahn IV schließlich insgesamt drei Meßsignale aufgezeichnet werden.

Die Aufzeichnung der einzelnen Signale nach vorgewählter Zahl und Aufteilung in Aufzeichnungsbahnen erfolgt in Abhängigkeit von den Ausgangssignalen der Komparatoren 21, 22 und 23 über Differenzierkondensatoren 32, 33 und 34. Die Differenzierimpulse dieser Kondensatoren, die in dem erwünschten Abtastschema der Meßsignale im Zeitmultiplex-Betrieb erzeugt werden, setzen über eine Summierschaltung 35 eine weitere monostabile Kippstufe 36, die Ausgangsimpulse liefert, die über eine Leistungsendstufe 37 als die Heizung des Schreibkopfes betätigende Schreibimpulse an den Schreibkopf 3 weitergegeben werden. Damit ergibt sich entsprechend dem Zeittakt der im Zeitmultiplex-Betrieb anfallenden Signalwerte der einzelnen vorgewählten Meßsignale eine punktweise Aufzeichnung in Y-Richtung bei jedem Y-Durchgang. Der Verschiebetakt in X-Richtung legt den Zeitverlauf über die sich in X-Richtung erstreckende Zeitachse fest.

Mit dem beschriebenen Ausführungsbeispiel ist also ein Schreibgerät geschaffen, bei dem mit nur einem einzigen Schreibkopf die Aufzeichnung einer Vielzahl von Meßsignalen in beliebigen Kombinationen in einer vorgebbaren Zahl von Aufzeichnungsbahnen auf einem einzigen Schreibträger möglich ist.

0027634

Patentansprüche

1. Schreibgerät, mit Schreibelement und Aufzeichnungsträger, die relativ zueinander zum Aufzeichnen von Meßsignalen auf dem Aufzeichnungsträger verschiebbar sind und wobei das Schreibelement zur Aufzeichnung mehrerer Signale auf dem Aufzeichnungsträger ausgebildet ist, d a d u r c h   g e k e n n z e i c h n e t ,   daß einem einzelnen Schreibkopf (3) als Schreibelement auf dem Aufzeichnungsträger (4) eine variable Zahl, z. B. zwischen eins und sechzehn, von Aufzeichnungsbahnen (z. B. I - IV) für Meßsignale (11) zugeordnet ist, in die der Schreibkopf durch Motorantrieb (6) in zeitlicher Aufeinanderfolge zur Aufzeichnung der Signale im Zeitmultiplex-Betrieb einfahrbar ist, wobei die Breite einer jeweils vorgewählten Bahn (I - IV) vorgegeben ist durch einen Breitenwähler (24), der entsprechend einem vorab an ihm einzustellenden Breitenprogramm die Breiten festlegt und  dem ein Breiten/ Spannungswandler (25) nachgeschaltet ist, der der jeweils auszuschreibenden Breite entsprechend eine mehr oder weniger rasch ansteigenden Rampenspannung ($U_R$) erzeugt, die zusammen mit den im Multiplex-Betrieb gewonnen Signalwerten einer Komparatorschaltung (21 - 23) zum Vergleich und zur Abgabe eines Schreibsignales an den Schreibkopf (3) zur Aufzeichnung eines Signalpunktes bei Gleichheit der Spannungswerte zugeleitet wird.

2. Schreibgerät nach Anspruch 1,   d a d u r c h   .   g e k e n n z e i c h n e t ,   daß der Breitenwähler (24) eine Zeitmultiplex-Schaltungsanordnung ist, die eine der Höchstzahl vorwählbarer Aufzeichnungsbahnen entsprechende Zahl von Spannungseingängen besitzt, die mit Spannungssignalen (U1 bis U16) beschickbar sind,

- 2 -        VPA 79 P 5959 EUR

wobei durch Wahl unterschiedlicher Schrittkombinationen der Spannungen (U1 bis U16) eine Vorwahl unterschiedlicher Breiten einzelner Aufzeichnungsbahnen möglich ist.

3. Schreibgerät nach Anspruch 2, d a d u r c h g e k e n n z e i c h n e t , daß der Breiten/Spannungswandler (25) ein Digital-Analog-Wandler ist, der eine Rampenspannung $(U_R)$ erzeugt, die in Abhängigkeit von eingestellten Schrittkombinationen der Spannungen (U1 bis U16) im Anstieg veränderbar ist.

4. Schreibgerät nach einem der Ansprüche 1 bis 3, d a d u r c h g e k e n n z e i c h n e t , daß zur Vorgabe variabler Zahlen von Meßsignalen (1a bis 16a, 1b bis 16b, 1c bis 16c), die durch den einzelnen Schreibkopf (3) auf dem Aufzeichnungsträger (4) aufgezeichnet werden sollen, eine weitere Zeitmultiplex-Schaltungsanordnung (17, 18, 19) vorhanden ist, die weitere Einzeleingänge für einzelne Signale beinhaltet, wobei die Gesamtzahl aller überhaupt darzustellender Signale durch die Gesamtzahl aller Spannungseingänge festgelegt ist und Unterkombinationen aus mit Signalen belegten Signaleingängen eine beliebige geringere Anzahl aufzuzeichnender Signale festlegen.

5. Schreibgerät nach Anspruch 4, d a d u r c h g e k e n n z e i c h n e t , daß die Verkoppelung der Breiteninformation des Breitenwählers (24) nebst Breiten/Spannungswandler (25) mit dem Signalzuordnungstakt der Zeitmultiplex-Schaltungsanordnung (17, 18, 19) mittels Kanalzähler (28) erfolgt, der bei in einer Richtung (Y) über den Aufzeichnungsträger (4) bewegtem Schreibkopf in den Grenzen jedes Breitensignals der Rampenspannung $(U_R)$ die Zeitmultiplex-

- 3 -    VPA 79 P 5959 EUR

Schaltungsanordnung (17, 18, 19) für die Meßsignale in der Weise schaltet, daß während eines Breitenschrittes nur solche Signale (aus 1a bis 16c) zum Vergleich mit der Rampenspannung ($U_R$) zur Komparatorschaltung (21 bis 23) geführt werden, die dazu bestimmt sind, in der Breite der gerade jeweils zu durchschreitenden Aufzeichnungsbahn am Aufzeichnungsträger (4) aufgezeichnet zu werden.

6. Schreibgerät nach Anspruch 5, d a d u r c h g e k e n n z e i c h n e t , daß die Breiteninformation für den Kanalzähler (28) aus der Rampenspannung mittels weiterem Komparator (26) und nachgeschalteter monostabiler Kippstufe (27) gewonnen wird, wobei der Komparator (26) die Rampenspannung ($U_R$) mit einem Spannungsreferenzwert ($U_{ref}$) vergleicht und bei Spannungsgleichheit jeweils ein Signal erzeugt, das die monostabile Kippstufe (27) im Sinne der Aktivierung des Kanalzählers (28) steuert.

7. Schreibgerät nach Anspruch 6, d a d u r c h g e k e n n z e i c h n e t , daß das Aktivierungssignal der monostabilen Kippstufe (27) zusätzlich auch noch einen Binärzähler (29) setzt, der funktionsmäßig mit dem Digital-Analog-Umsetzer (25) für die Rampenspannung ($U_R$) gekoppelt und eingangsseitig von den Impulsen eines Oszillators (30) gespeist ist, welche Oszillatorimpulse gleichzeitig die Taktimpulse zum Betrieb der Antriebsschaltung (31) für den Motorantrieb (6) des Schreibkopfes (3) sind.

8. Schreibgerät nach einem der Ansprüche 1 bis 7, d a d u r c h g e k e n n z e i c h n e t , daß jedes von der Komparatorschaltung (21 bis 23) der Zeitmultiplex-Anordnung (17, 18, 19) für aufzuzeichnende Meßsignale (1a bis 16c) erzeugte Ausgangssignal einem Pulsformglied (36) mit nachgeschaltetem Energieerzeuger (37) für Betätigung des Schreibkopfes (3) zugeleitet wird.

9. Schreibgerät nach Anspruch 8, d a d u r c h g e k e n n z e i c h n e t , daß das Pulsformglied (36) eine monostabile Kippstufe und der Energieerzeuger (37) eine Leistungsendstufe für den von der monostabilen Kippstufe (36) erzeugten Ausgangsimpuls ist.

10. Schreibgerät nach einem der Ansprüche 1 bis 9, d a d u r c h g e k e n n z e i c h n e t , daß bei einer durch den Breitenwähler (24) vorgebbaren Höchstzahl von Aufzeichnungsbahnen mit beliebig gleicher oder ungleicher Breite dieser Höchstzahl eine noch größere Höchstzahl von Einzelsignalen (1a bis 16c) an einer entsprechend höheren Zahl von Spannungseingängen der Multiplex-Schaltungsanordnung (17 bis 19) zuordbar ist, wobei die Gesamtanordnung aus Breitenwähler und Zeitmultiplex-Schaltungsanordnung gemeinsam so steuerbar ist, daß eine beliebige Anzahl von Meßsignalen in beliebigen Kombinationen nur einer einzelnen oder in Unterkombination einer beliebigen Anzahl von Aufzeichnungsbahnen zuordbar ist.

11. Schreibgerät nach Anspruch 10, d a d u r c h g e k e n n z e i c h n e t , daß bei einer einstell-baren Zahl von vorzugsweise maximal sechzehn Aufzeichnungsbahnen die Zeitmultiplex-Schaltungsanordnung (17 bis 19) insgesamt achtundvierzig Signaleingänge (1a bis 16c) für einzelne Signale aufweist, so daß in gleichmäßiger Verteilung in die maximal vorzugsweise sech-

- 5 -          VPA 79 P 5959  EUR

zehn Aufzeichnungsbahnen in jeder einzelnen Aufzeichnungsbahn insgesamt maximal sechzehn einzelne Signale
aufzeichenbar sind.

FIG 1

FIG 2

FIG 3